# EUROPEAN PATENT APPLICATION

(11) **EP 4 080 028 A1**
(43) Date of publication of application: **26.10.2022**
(21) Application number: 21747031.9
(22) Date of filing: 27.01.2021
(51) Int. Cl.: F02B 63/00, F02B 77/13

(54) **ELECTRICITY GENERATING FACILITY**

(30) Priority: 27.01.2020 JP 2020011193
(71) Applicant: MITSUBISHI HEAVY INDUSTRIES ENGINE & TURBOCHARGER, LTD., Sagamihara-shi, Kanagawa 252-5293 (JP)
(72) Inventor: KAWASHIMA, Susumu, Sagamihara-shi, Kanagawa 252-5293 (JP)
(74) Representative: Studio Torta S.p.A.
(86) International application number: PCT/JP2021/002805
(87) International publication number: WO 2021/153602

(57) **Abstract**

This generator set is provided with an airflow path which has an air inlet and an air outlet and through which a cooling air flows, a power generator, an alternator which is driven by the power generator, and a radiator which is installed in the airflow path, with a cooling medium circulating between the power generator and the radiator, wherein the inflow area of the cooling airflow into the radiator is greater than the passage area of the air inlet.

## Description

### Technical Field

The present disclosure relates to a generator set including a power generation unit and so on.

### Background Art

A generator set is configured by, for example, a power generation unit being placed in a housing called an enclosure. The enclosure is installed inside or outside a building. The power generation unit has an alternator and a power generator (such as an engine) driving the alternator. The enclosure functions as a soundproof cover for reducing noise generated from the alternator or the power generator. In addition, a fan is installed in the enclosure, and air taken in from outside by the fan is used to cool the power generation unit. The air is discharged to the atmosphere after cooling the power generation unit.

An example of such generator set is described in PTL 1.

### Citation List

### Patent Literature

PTL 1: Japanese Unexamined Patent Publication No. 2006-125260

### Summary of Invention

### Technical Problem

The enclosure functions as a soundproof cover and functions to ensure a cooling air passage to the power generator. In addition, the enclosure functions as a rainwater infiltration countermeasure in a case where the power generation unit is installed outside a building. The cooling efficiency of the power generator is determined by the air volume of a cooling fan and the area of the cooling passage within the enclosure. Accordingly, when the output of the power generator increases, the cooling efficiency also needs to be increased, which results in a larger cooling fan or an enclosure. As the size of the enclosure increases, the vibration of the cooling fan or the air-drawing noise at the air inlet of the enclosure increases and the total noise from the enclosure also increases.

The present disclosure is to solve the above problems, and an object of the present disclosure is to provide a generator set for size reduction.

### Solution to Problem

An generator set of the present disclosure for achieving the above object includes: an air flow path having an air inlet and an air outlet and allowing cooling air to flow; a power generator; an alternator driven by the power generator; and a radiator installed in the air flow path and allowing a cooling medium to circulate between the power generator and the radiator, in which an inflow area of the cooling air to the radiator is larger than a passage area on the air inlet side.

### Advantageous Effects of Invention

With the generator set of the present disclosure, equipment size reduction can be achieved.

### Brief Description of Drawings

Fig. 1 is a side view illustrating a generator set to which an enclosure of a first embodiment is applied.
Fig. 2 is a plan view of the generator set.
Fig. 3 is a rear view of the generator set.
Fig. 4 is a side view illustrating a generator set to which an enclosure of a second embodiment is applied.
Fig. 5 is a plan view of the generator set.

### Description of Embodiments

Hereinafter, a preferred embodiment of the present disclosure will be described in detail with reference to the drawings. The present disclosure is not limited by this embodiment and, in a case where there is a plurality of embodiments, that are configured by inter-embodiment combinations are also included. In addition, components in the embodiment include those that can be easily assumed by those skilled in the art, those that are substantially the same, and those in a so-called equal range.

### [First Embodiment]

### [Generator set]

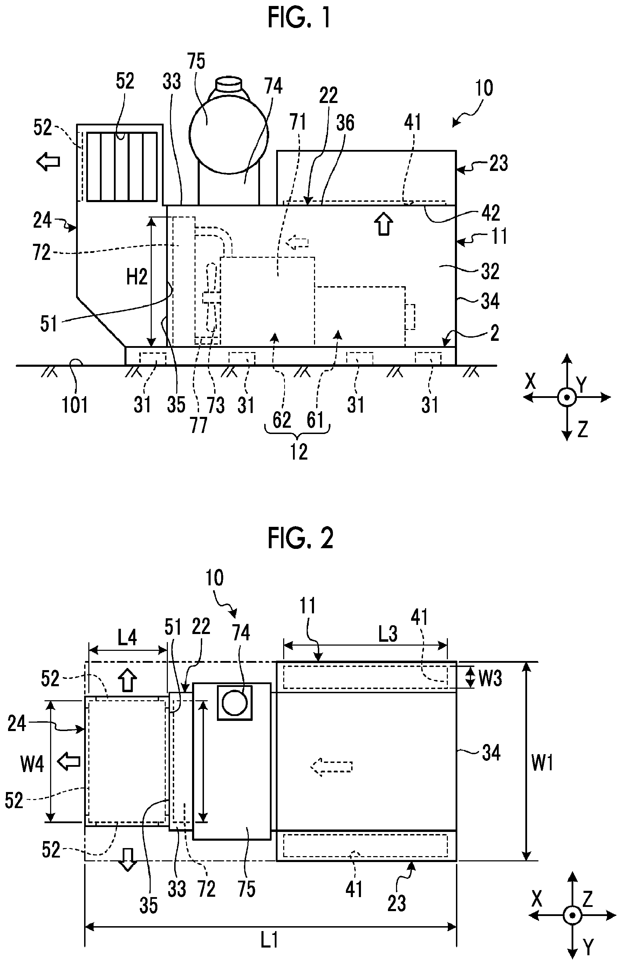

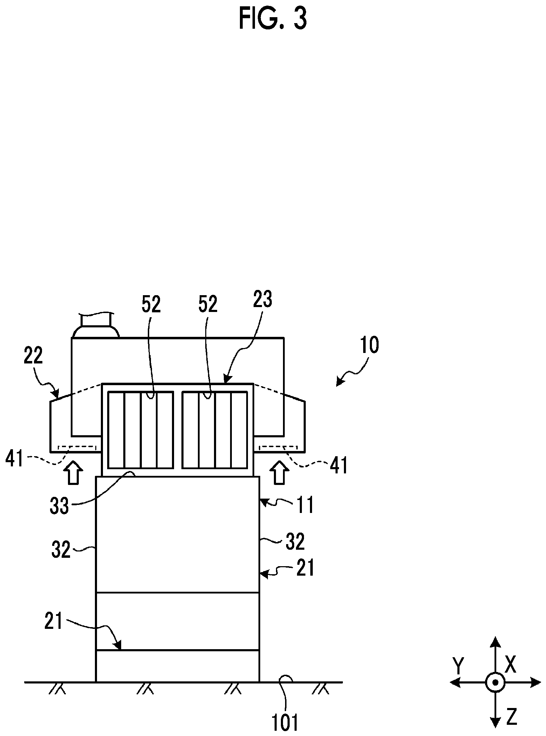

Fig. 1 is a side view illustrating a generator set to which an enclosure of a first embodiment is applied, Fig. 2 is a plan view of the generator set, and Fig. 3 is a rear view of the generator set. In the following description, the longitudinal direction of the generator set (left-right direction in Figs. 1 and 2) is the X direction, the width direction of the generator set (up-down direction in Fig. 2) is the Y direction, and the height direction of the generator set (up-down direction in Fig. 1) is the Z direction.

In the first embodiment, as illustrated in Figs. 1 to 3, a generator set 10 is installed inside or outside a building (not illustrated). The generator set 10 includes an enclosure 11 and a power generation unit 12. The power generation unit 12 is installed in the enclosure 11.

The enclosure 11 includes a common bed 21, a housing 22, an intake duct 23, and an exhaust duct 24. As for the enclosure 11, the common bed 21, the housing 22, the intake duct 23, and the exhaust duct 24 are linearly installed along the X direction.

The common bed 21 is installed and fixed along the X direction on the floor 101. The common bed 21 has a rectangular plate shape in a plan view and has vibration-proofing devices 31. The common bed 21 is installed on the floor 101 via the vibration-proofing device 31. The vibration-proofing device 31 consists of multiple vibration-proofing rubbers and is attached below the common bed 21 at predetermined intervals. However, the vibration-proofing device 31 is not limited to this design.

The housing 22 has a rectangular parallelepiped box shape. The housing 22 is shorter in X direction length than the common bed 21, and the Y direction width of the housing 22 is almost equal to the Y direction width of the common bed 21. The housing 22 has left and right walls 32, a ceiling 33, and a rear wall 34. As for the housing 22, the bottom in the Z direction is open, a front connecting opening 35 is provided in the X direction (left end in Fig. 1), and a rear connecting opening 36 is provided in the above of Z direction in the other end in the X direction (right end in Fig. 1) . The housing 22 is installed and fixed so as to cover the top face of the common bed 21.

The intake duct 23 has a rectangular tube shape. The intake duct 23 is installed in the Z direction upper in the other end of the housing 22 in the X direction. The intake duct 23 is installed along the X direction and the Y direction. The intake duct 23 is provided with a pair of air inlets 41 on the underside in the Z direction in one end and on the underside on the other end in the Y direction. In addition, as for the intake duct 23, a connecting opening 42 is formed in the Z direction between the pair of air inlets 41. As for the intake duct 23, the connecting opening 42 is gaplessly connected to the rear connecting opening 36 of the housing 22. Here, the Y direction width of the intake duct 23 is larger than the Y direction width of the housing 22. In other words, as for the intake duct 23, the pair of air inlets 41 protrude from the housing 22 in the Y direction.

The exhaust duct 24 has a rectangular tube shape. The exhaust duct 24 is installed at one end of the housing 22 in the X direction. The exhaust duct 24 is installed along the Z direction and is open on the underside. As for the exhaust duct 24, a connecting opening 51 is formed on the housing 22 side of the lower end in the Z direction. In addition, the exhaust duct 24 is provided with air outlets 52 on both sides in the Y direction and one side in the X direction in the upper end in the Z direction. As for the exhaust duct 24, the connecting 51 is gaplessly connected to the front connecting 35 of the housing 22. The exhaust duct 24 is installed and fixed such that the lower end of the exhaust duct 24 covers the top face of the common bed 21. Here, the Y direction width of the exhaust duct 24 is substantially equal to the Y direction width of the common bed 21 and the Y direction width of the housing 22.

The power generation unit 12 includes an alternator 61 and a power generator 62. The power generator 62 includes an engine 71, a radiator 72, a cooling fan 73, an exhaust pipe 74, and a silencer 75.

The engine 71 is, for example, a diesel engine. Cooling water flows within the engine 71 to take heat and reduces the temperature. The radiator 72 is an air-cooled radiator and takes heat from cooling water to decrease the temperature. The engine 71 and the radiator 72 are connected by water supply pipes 76 and 77. By a water pump (not illustrated) provided to the engine 71, cooling water is circulated via the water supply pipes 76 and 77 between the engine 71 and the radiator 72. The engine 71 is cooled by the cooling water and decreases the temperature, and the high-temperature engine cooling water is cooled by the radiator 72 and decreases the temperature.

The engine 71 is provided with the cooling fan 73 driven and rotated in synchronization with the rotation of the engine 71. The cooling fan 73 is installed between the engine 71 and the radiator 72. In other words, the cooling fan 73 is provided downstream of the engine 71 in an air flow direction. When the cooling fan 73 is driven and rotated, the air flows from the engine 71 to the radiator 72. The radiator 72 has multiple tubes through which cooling water flows. The cooling water flowing through the multiple tubes is cooled by contact with the air flow generated by the cooling fan 73.

The exhaust pipe 74, which discharges exhaust gas, is connected to the engine 71. The exhaust pipe 74 is provided with the silencer 75. The alternator 61 is driven and connected to the engine 71 of the power generator 62. The alternator 61 is driven by the rotational driving force of the engine 71 being transmitted. The alternator 61 is driven to generate electric power.

The alternator 61 and the power generator 62 constituting the power generation unit 12 are mounted on the common bed 21. The engine 71, the radiator 72, the cooling fan 73, and the alternator 61 are placed on the common bed 21. The silencer 75 is placed on top of the housing 22. The exhaust pipe 74 is installed along the Z direction so as to connect the engine 71 and the silencer 75. The exhaust pipe 74 penetrates the ceiling 33 of the housing 22. The alternator 61 is mounted on the common bed 21 in a state of being driven and connected to the engine 71.

In addition, the housing 22 is installed on the common bed 21 with the engine 71, the radiator 72, the cooling fan 73, and the alternator 61 placed on the common bed 21. The housing 22 covers the engine 71, the radiator 72, the cooling fan 73, and the alternator 61. The intake duct 23 and the exhaust duct 24 are connected to the housing 22. Accordingly, an air flow path where air flows through the intake duct 23, the housing 22, and the exhaust duct 24 is formed.

In the generator set 10 configured as described above, the inflow area of the cooling air to the radiator 72 is set to be larger than the passage area on the air inlet 41. In addition, the inflow area of the cooling air to the radiator 72 is set to be larger than the passage area on the air outlet 52. Further, the passage area on the air inlet 41 is set to be larger than the passage area on the air outlet 52 side. Here, the passage area on the air inlet 41 side is the opening area of the air inlet 41, and the passage area on the air outlet 52 side is the passage area of the exhaust duct 24.

In other words, a projected area A of the generator set 10 seen from above in the Z direction is the area calculated by multiplying a maximum length L1 of the generator set 10 in the X direction by a maximum width W1 of the generator set 10 in the Y direction. An inflow area B of the cooling air to the radiator 72 is the area of the front face of the radiator 72 seen from one side in the X direction and is the area calculated by multiplying a maximum height H2 of the radiator 72 by a maximum width W2 of the radiator 72 in the Y direction. Here, the maximum height H2 and the maximum width W2 of the radiator 72 are not, for example, the maximum height and the maximum width of the outer shape of the radiator 72 but the maximum height and the maximum width of the region where the cooling air passes with respect to the radiator 72.

A passage area C at the air inlet 41 is twice the area calculated by multiplying a maximum height length L3 of one air inlet 41 along the X direction by a maximum width W3 of the air inlet 41 in the Y direction. A passage area D of the air outlet 52 side, that is, the exhaust duct 24 is the area calculated by multiplying a maximum height length L4 along the X direction of the Z direction flow path of the exhaust duct 24 leading to the air outlet 52 by a maximum width W4 of the air outlet 52 in the Y direction.

Then, when the projected area A of the generator set 10 is 1.00, the inflow area B of the cooling air to the radiator 72, the passage area C of the air inlet 41, and the passage area D of the exhaust duct 24 are set in the following ranges and relationships.
Inflow area B of cooling air to radiator 72 = 0.12 to 0.18
Passage area C of air inlet 41 = 0.11 to 0.13
Passage area D of exhaust duct 24 = 0.09 to 0.13
B > C
B > D
C > D

The numerical ranges of B, C, and D are particularly preferable ranges and are not limited to the above numerical ranges insofar as size relationships are specified.

### [Operation of Generator set]

When the engine 71 constituting the power generator 62 is driven in the generator set 10, the water pump operates in synchronization to circulate the cooling water between the engine 71 and the radiator 72. In addition, when the engine 71 is driven, the cooling fan 73 operates in synchronization to cause air to flow in the enclosure 11.

In other words, when the cooling fan 73 operates, the internal air flows from the engine 71 side to the radiator 72 side. Then, a negative pressure is generated on the engine 71 side of the cooling fan 73. The generated negative pressure acts on the housing 22 and the intake duct 23, and external air is taken from the air inlet 41. The external air taken from the air inlet 41 is introduced into the housing 22 through the intake duct 23 and is discharged to the atmosphere from the air outlet 52 through the exhaust duct 24.

The air flowing in the housing 22 is guided to the radiator 72. The radiator 72 cools the cooling water circulating between the engine 71 and the radiator 72 to cause a decrease in temperature. Accordingly, the temperature of the engine 71 decreases by the engine 71 being cooled by the temperature-lowered cooling water.

In addition, when the engine 71 is driven, the alternator 61 is driven and the alternator 61 generates electric power. Then, the temperatures of the alternator 61 and the power generator 62, which are heat sources, rise. However, the temperature-risen alternator 61 and power generator 62 are cooled by the air flowing in the housing 22.

In the first embodiment, the inflow area B of the radiator 72 is set to be larger than the passage area C of the air inlet 41, and the inflow area B of the radiator 72 is set to be larger than the passage area D of the exhaust duct 24. In other words, the size of the cooling fan 73 is reduced in order to decrease the cooling air amount of the cooling fan 73 while increasing the size of the radiator 72 in order to increase the amount of cooling water cooling the engine 71. In other words, the degree of dependence on cooling the engine 71 with cooling air is reduced, and the degree of dependence on cooling the engine 71 with cooling water is increased.

Accordingly, the passage area C of the air inlet 41 and the passage area D of the exhaust duct 24 are reduced in order to decrease the cooling air amount, and the enclosure 11 can be reduced in size. In addition, since the passage area C of the air inlet 41 is reduced, the amount of air taken into the enclosure 11 decreases and it becomes easy to take measures against rainwater infiltrating into the enclosure 11 together with air when it rains.

### [Second Embodiment]

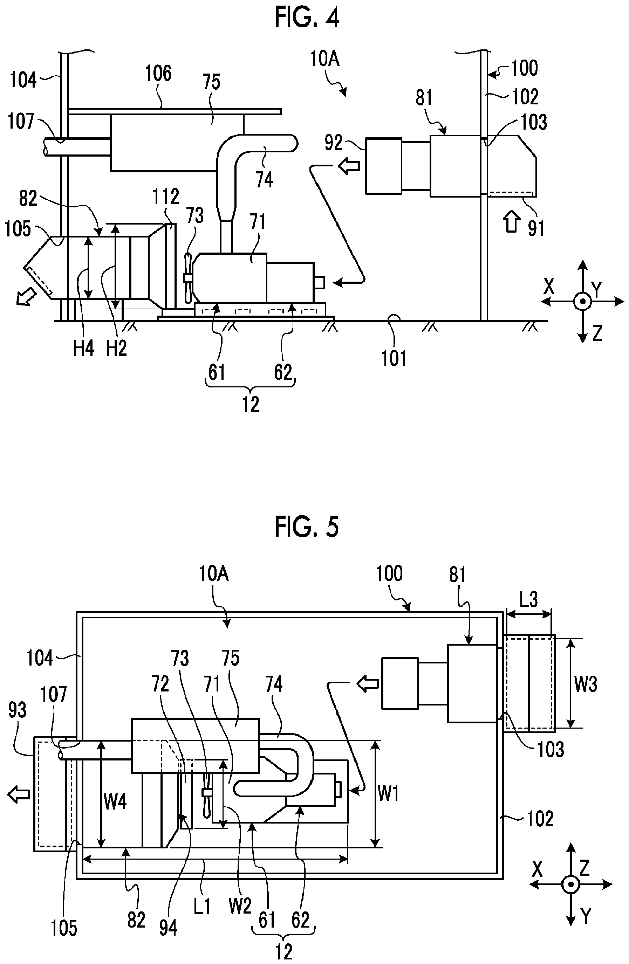

Fig. 4 is a side view illustrating a generator set to which an enclosure of a second embodiment is applied, and Fig. 5 is a plan view of the generator set. Members functionally similar to those of the first embodiment described above are denoted by the same reference numerals with detailed description thereof omitted.

In the second embodiment, a generator set 10A is installed in a building 100 as illustrated in Figs. 4 and 5. The generator set 10A includes an intake duct 81, an exhaust duct 82, and the power generation unit 12.

The intake duct 81 has a rectangular tube shape. The intake duct 81 is installed along the X direction. The intake duct 81 is provided with an air inlet 91 in one end in the X direction. The intake duct 81 is provided with an air outlet 92 in the other end in the X direction. The intake duct 81 is inserted through an opening 103 formed in a wall 102 of the building 100, the air inlet 91 is positioned outside the building 100, and the air outlet 92 is positioned inside the building 100.

The exhaust duct 82 has a rectangular tube shape. The exhaust duct 82 is installed along the X direction. The exhaust duct 82 is provided with an air outlet 93 in one end in the X direction. The exhaust duct 82 is provided with an air suction opening 94 in the other end in the X direction. The exhaust duct 82 is inserted through an opening 105 formed in a wall 104 of the building 100, the air outlet 93 is positioned outside the building 100, and the air suction opening 94 is positioned inside the building 100.

The power generation unit 12 includes an alternator 61 and a power generator 62. The power generator 62 includes the engine 71, the radiator 72, the cooling fan 73, the exhaust pipe 74, and the silencer 75.

The alternator 61 and the power generator 62 are mounted on the common bed 21. The engine 71, the radiator 72, the cooling fan 73, and the alternator 61 are placed on the common bed 21. The silencer 75 is fixed to a ceiling 106 of the building 100. The exhaust pipe 74 connects the engine 71 and the silencer 75. The end of the exhaust pipe 74 is inserted through an opening 107 formed in the wall 104 of the building 100 and is positioned outside the building 100. The alternator 61 is mounted on the common bed 21 in a state of being driven and connected to the engine 71.

In addition, the engine 71, the radiator 72, and the cooling fan 73 are installed along the X direction, and the radiator 72 faces the air suction opening 94 of the exhaust duct 82 with respect to the X direction. In other words, the engine 71, the radiator 72, the cooling fan 73, and the exhaust duct 82 are installed along the X direction. The intake duct 81 and the exhaust duct 82 are installed so as to be misaligned in the Y direction and the Z direction. The intake duct 81 is installed at a predetermined height from the floor 101, and the exhaust duct 82 is installed on the floor 101. Accordingly, an air flow path S where air flows from the intake duct 81 to the exhaust duct 24 via the alternator 61 and the power generator 62 is formed in the building 100.

In the generator set 10A configured as described above, the inflow area of the cooling air to the radiator 72 is set to be larger than the passage area of the air inlet 91. In addition, the inflow area of the cooling air to the radiator 72 is set to be larger than the passage area of the air outlet 93. Further, the passage area of the air inlet 91 is set to be larger than the passage area of the air outlet 93.

In other words, the projected area A of the generator set 10 seen from above in the Z direction is the area calculated by multiplying the maximum length L1 in the X direction of the exhaust duct 82 in the building 100 and the power generation unit 12 by the maximum width W1 in the Y direction. The inflow area B of the cooling air to the radiator 72 is the area of the front face of the radiator 72 seen from one side in the X direction and is the area calculated by multiplying the maximum height H2 of the radiator 72 by the maximum width W2 in the Y direction. The passage area C of the air inlet 91 is the area calculated by multiplying the maximum height length L3 of the air inlet 91 along the X direction by the maximum width W3 in the Y direction. The passage area D of the air outlet 93 is the area calculated by multiplying a maximum height H4 along the Z direction of the X direction flow path of the exhaust duct 82 in the building 100 leading to the air outlet 93 by the maximum width W4 in the Y direction.

Then, when the projected area A of the generator set 10 is 1.00, the inflow area B of the cooling air to the radiator 72, the passage area C of the air inlet 41, and the passage area D of the exhaust duct 24 are set in the following ranges and relationships.
Inflow area B of cooling air to radiator 72 = 0.12 to 0.18
Passage area C of air inlet 41 = 0.11 to 0.13
Passage area D of exhaust duct 24 = 0.09 to 0.13
B > C
B > D
C > D

### [Action and Effect of Present Embodiment]

An generator set according to a first aspect includes: an air flow path S having an air inlet 41, 91 and an air outlet 52, 93 and allowing cooling air to flow; a power generator 62; an alternator 61 driven by the power generator 62; and a radiator 72 installed in the air flow path S and allowing cooling water to circulate between the power generator 62 and the radiator 72, in which an inflow area of the cooling air to the radiator 72 is larger than a passage area of the air inlet 41, 91.

In the generator set according to the first aspect, the inflow area of the cooling air to the radiator 72 is larger than the passage area of the air inlet 41, 91, and thus the cooling air amount decreases and the enclosure 11 and the intake duct 81 can be reduced in size. In addition, the amount of air taken into the enclosure 11 and the building 100 decreases, and thus it becomes easy to take measures against rainwater infiltrating into the enclosure 11 and the building 100 together with air. Further, by reducing the size of the cooling fan 73, it is possible to suppress the generation of vibration of the cooling fan 73 and the generation of air-drawing noise in the air inlet 41, 91.

In the generator set according to a second aspect, the inflow area of the cooling air to the radiator 72 is larger than a passage area of the air outlet 52, 93 side (exhaust duct 24). As a result, the cooling air amount decreases, and thus the enclosure 11 and the exhaust duct 82 can be reduced in size.

In the generator set according to a third aspect, the passage area of the air inlet 41, 91 is larger than a passage area of the air outlet 52, 93 side exhaust duct 24. As a result, the velocity of the air taken into the enclosure 11 or the building 100 from the air inlet 41, 91 can be reduced.

In the generator set according to a fourth aspect, the air flow path is configured by having an enclosure 11 covering the power generator 62, the alternator 61, and the radiator 72 and providing a cooling fan 73 between the power generator 62 and the radiator 72 in the enclosure 11. As a result, the enclosure 11 and the cooling fan 73 can be reduced in size.

In the generator set according to a fifth aspect, the power generator 62, the alternator 61, and the radiator 72 are installed in a building 100, an intake duct 81 is installed on one wall 102 of the building 100, an exhaust duct 82 is installed on the other wall 104 of the building 100, and the air flow path is provided between the intake duct 81 and the exhaust duct 82 in the building 100. As a result, the intake duct 81 and the cooling fan 73 can be reduced in size.

In the embodiments described above, the enclosure 11, the intake duct 81, and the exhaust duct 82 are not limited to the shapes described above.

In addition, although the cooling fan 73 constituting the power generator 62 is applied as a fan in the embodiments described above, a separate fan may be provided without being limited to this configuration.

### Reference Signs List

10, 10A: generator set
11: enclosure
12: power generation unit
21: common bed
22: housing
23, 81: intake duct
24, 82: exhaust duct
31: vibration-proofing device
32: side wall
33: ceiling
34: rear wall
35: front connecting opening
36: rear connecting opening
41, 91: air inlet
42: connecting opening
51: connecting opening
52, 93: air outlet
61: alternator
62: power generator
71: engine
72: radiator
73: cooling fan
74: exhaust pipe
75: silencer
100: building
101: floor
102, 104: wall
S: air flow path

## Claims

1. A generator set comprising:
an air flow path including an air inlet and an air outlet and allowing cooling air to flow;
a power generator;
an alternator driven by the power generator; and
a radiator installed in the air flow path and allowing a cooling medium to circulate between the power generator and the radiator,
wherein an inflow area of the cooling air to the radiator is larger than a passage area on the air inlet side.

2. The generator set according to Claim 1, wherein the inflow area of the cooling air to the radiator is larger than a passage area on the air outlet side.

3. The generator set according to Claim 1 or 2, wherein the passage area on the air inlet side is larger than a passage area on the air outlet side.

4. The generator set according to any one of Claims 1 to 3, wherein the air flow path is configured by having an enclosure covering the power generator, the generator, and the radiator and providing a fan between the power generator and the radiator in the enclosure.

5. The generator set according to any one of Claims 1 to 3, wherein the power generator, the generator, and the radiator are installed in a building, an intake duct is installed on one wall of the building, an exhaust duct is installed on the other wall of the building, and the air flow path is provided between the intake duct and the exhaust duct in the building.
